(19) Europäisches Patentamt
European Patent Office
Office européen des brevets

(11) **EP 1 832 965 A1**

(12) **EUROPEAN PATENT APPLICATION**

(43) Date of publication:
**12.09.2007 Bulletin 2007/37**

(51) Int Cl.:
***G06F 3/041*** *(2006.01)*

(21) Application number: **06110984.9**

(22) Date of filing: **10.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **E-Lead Electronic Co., Ltd.**
**Chang-Hua (TW)**

(72) Inventor: **Chen, Stephen**
**Chang-Hua (TW)**

(74) Representative: **Viering, Jentschura & Partner**
**Postfach 22 14 43**
**80504 München (DE)**

(54) **Composite cursor input method**

(57) A composite cursor input method that moves a cursor through at least two different ratios includes at least the steps of: 1. getting a cursor position on a screen; 2. getting a displacement signal; 3. jointly calculating a displacement value; and 4. moving the cursor on the screen. The method can move the cursor rapidly.

FIG. 4

EP 1 832 965 A1

**Description**

## BACKGROUND OF THE INVENTION

1. Field of the Invention

The present invention relates to a composite cursor input method and particularly to a composite cursor input method that moves a cursor through at least two different ratios.

2. Description of the Prior Art

The computer technology is increasing focusing on humanized concept. Operation mainly adopts window menu selection. By moving the cursor through a mouse, selecting operation can be done rapidly. On the notebook computers that demands small size, a Touch-sensitive pad usually is provided to replace the mouse to control the cursor to make fast movement.

While the notebook computer mostly uses the Touch-sensitive pad to replace the mouse to overcome the problems of bulky size and line connection occurred to the mouse, to facilitate operation and carrying the Touch-sensitive pad is made with a limited size. Hence in the conventional design the coordinate resolution of the Touch-sensitive pad is amplified proportionally to the screen coordinates. Thus a small movement of a finger on the Touch-sensitive padcan generate a greater displacement for the cursor on the screen. Thereby the cursor can be moved to any position on the screen. However, if the coordinate resolution of the Touch-sensitive pad corresponding to the coordinates on the screen is too large, to move the cursor accurately to the required location is difficult. On the other hand, if the coordinate resolution of the Touch-sensitive pad corresponding to the coordinates on the screen is too small, moving the cursor accurately to the required location on the screen is easier, but the response of the cursor becomes insensitive. As a result, the finger has to move on the Touch-sensitive pad repeatedly to move the cursor, and use convenience drops.

## SUMMARY OF THE INVENTION

In view of the aforesaid problems, it is an object of the present invention to provide a composite cursor input method that has at least two cursor control pads to provide a composite and non-proportional input to control movement of a cursor on a screen. The method includes at least the following procedures: (1) get a cursor position on the screen, (2) get a displacement signal, (3) jointly calculate a displacement value, and (4) move the cursor on the screen. By means of this approach the cursor can be moved rapidly.

The displacement signal set forth above includes at least a first displacement signal of finger movement detected on a first cursor control pad and a second displacement signal of finger movement detected on a second cursor control pad, and may also include a third displacement signal of finger movement detected on a third cursor control pad.

The ratio of the coordinate resolution of the first displacement signal of the first cursor control pad against the coordinates of the screen is much greater than the ratio of the coordinate resolution of the second displacement signal of the second cursor control pad against the coordinates of the screen.

The foregoing, as well as additional objects, features and advantages of the invention will be more readily apparent from the following detailed description, which proceeds with reference to the accompanying drawings.

## BRIEF DESCRIPTION OF THE DRAWINGS

FIG. 1 is a perspective view of an embodiment of the input device of the invention.

FIG. 2 is a perspective view of the first and second cursor control pads of the invention.

FIG. 3 is a flow chart of the input method of the invention.

FIG. 4 is a schematic view for controlling cursor movement in operation-1 according to the invention.

FIG. 5 is an operation block diagram of the invention.

FIG. 6 is a schematic view for controlling cursor movement in operation-2 according to the invention.

FIG. 7 is a schematic view for controlling cursor movement in operation-3 according to the invention.

FIG. 8 is a schematic view for controlling cursor movement in operation-4 according to the invention.

FIG. 9 is a schematic view of an embodiment of a fragmentary picture of the invention.

FIG. 10 is a schematic view of another embodiment of a fragmentary picture of the invention.

## DESCRIPTION OF THE PREFERRED EMBODIMENTS

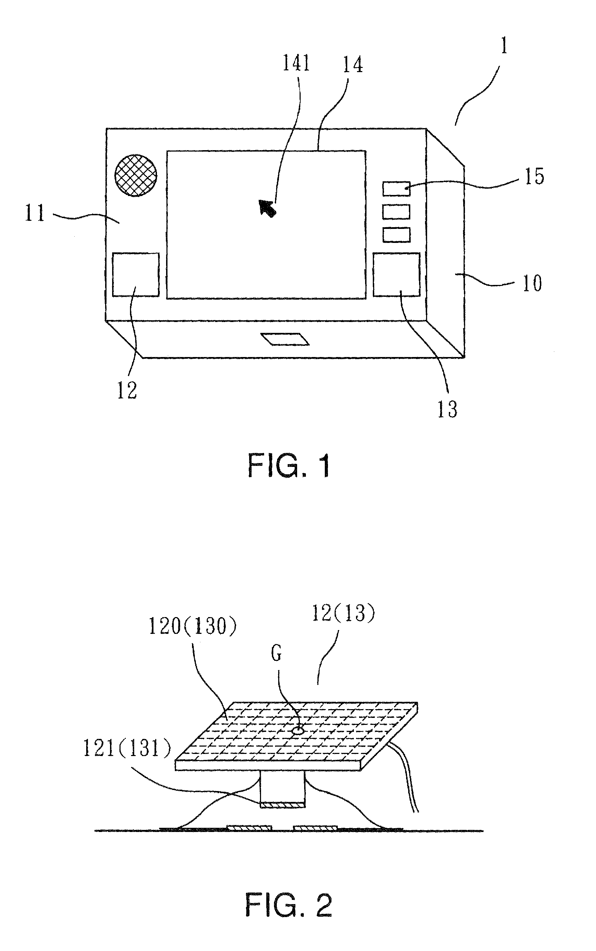

Referring to FIG. 1, the composite cursor input device 1 according to the invention includes at least a first cursor control pad 12 and a second cursor control pad 13 that are installed on a surface 11 of a base 10 accessible by user's fingers to control movement of a cursor 141 on a screen 14.

Referring to FIG. 2, the first cursor control pad 12 and the second cursor control pad 13 have respectively a surface 120 and 130. They are Touch-sensitive pads that may be resistor induction panels or condenser induction panels to detect touching of fingers to generate displacement signals. The first and second cursor control panes 12 and 13 further have respectively a pressure switch 121 and 131 to detect the depressing pressure of the fingers to function as an input confirmation key.

The surfaces 120 and 130 of the first and second cursor control pad 12 and 13 have respectively a mark G touchable by the fingers to recognize the touch position. The mark G may be an indented or a bulged spot, or a trace distinguishable by touching of the fingers.

The first and second cursor control pad 12 and 13 are controlled by at least one button 15 to complete all functions of a mouse, or to switch to desired operation modes.

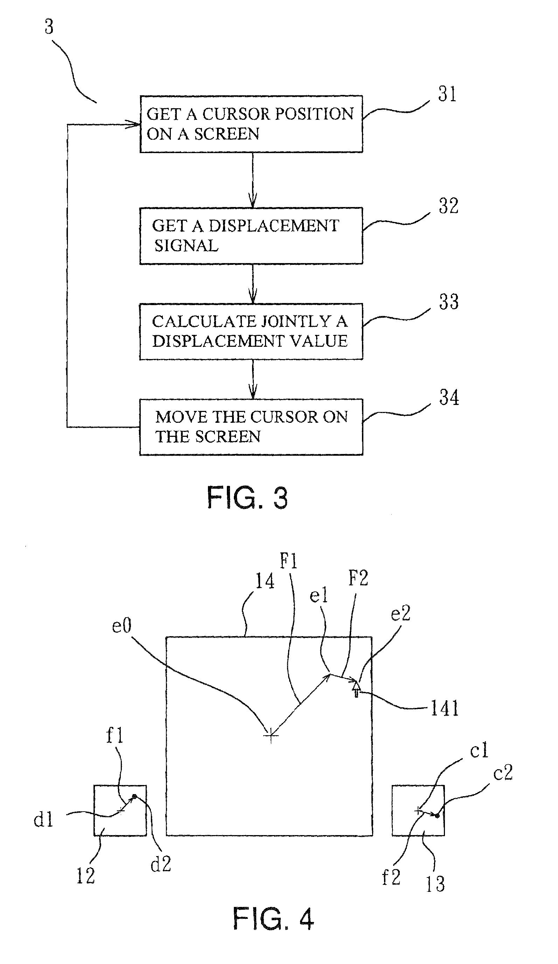

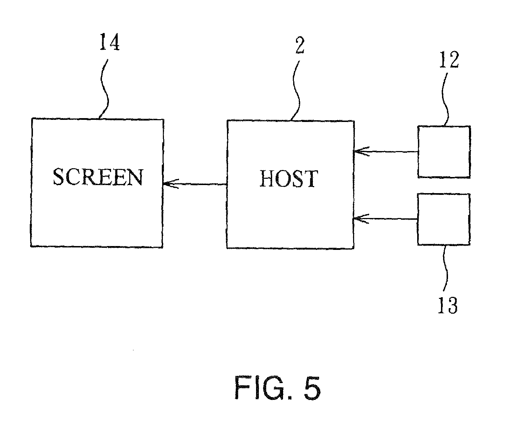

Refer to FIG. 3, the input method of the invention includes at least the following procedures (also referring to FIGS. 4 and 5)

1. Obtain a cursor position on a screen (step 31): a host 2 gets a present position e0 of the cursor 141 on the screen 14 that serves as the starting point;

2. Obtain a displacement signal (step 32): the first and second cursor control pads 12 and 13 detect respectively a first displacement signal and a second displacement signal of the finger; namely the first displacement signal generated by the first cursor control pad 12 while the finger moves from point d1 to point d2, and the second displacement signal generated by the second cursor control pad 13 while the finger moves from point c 1 to point c2;

3. Calculate jointly a displacement value (step 33): based on the first and second displacement signals to jointly calculate the displacement of the cursor;

4. Move the cursor on the screen (step 34): based on the calculated cursor displacement, move the cursor 141 on the screen 14 to a new corresponding position. For instance, the cursor 141 corresponding to the first displacement signal is moved from point e0 to e1, and the cursor 141 corresponding to the second displacement signal is moved from point e1 to e2.

The step of calculate jointly a displacement value (step 33) set forth above can be done based on absolute coordinate values to get the displacement of the cursor 141. For instance, the finger moves on the first cursor control pad 12 from point d1 to d2, the coordinate of point d2 is (X1, Y1); and the finger moves on the second cursor control pad 13 from point c1 to c2, the coordinate is (X2, Y2); then the displacement value of the cursor calculated based on the absolute coordinate values is:

$$A.(X1,Y1)+B.(X2,Y2),$$

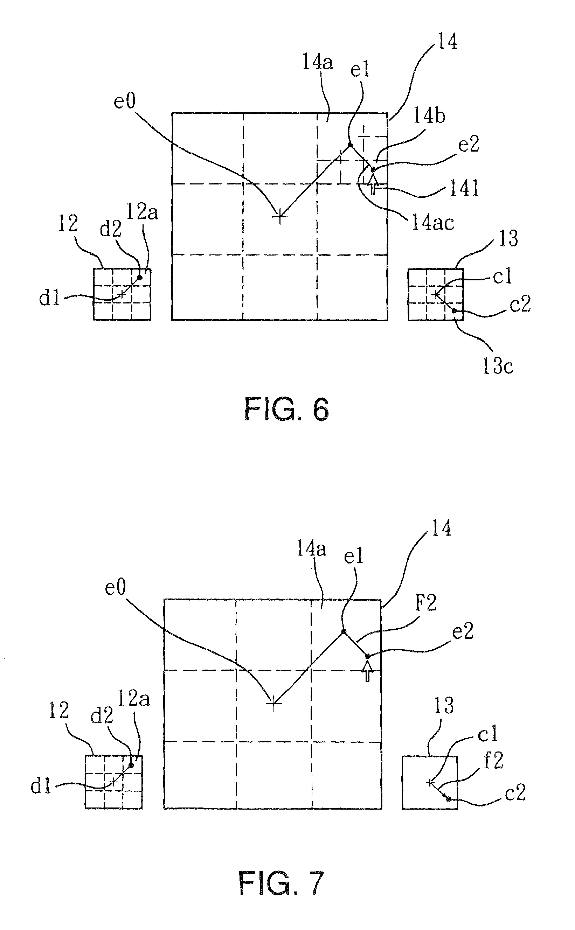

where A and B are constants, and A is greater than B. The values of A and B are adjustable. During operation, for moving the cursor 141 through the first cursor control pad 12, the finger moves to a segment 12a where point d2 is located on the first cursor control pad 12 (referring to FIG. 6, the broken line is a pseudo line) that is directly corresponding to moving the corresponding cursor 141 to point e1 on a large segment 14a of the screen 14. For moving the cursor 141 through the second cursor control pad 13, the finger moves to a segment 13c where point c2 is located on the second cursor control pad 13 that is directly corresponding to moving the corresponding cursor 141 to point e2 on a small segment 14ac on the large segment 14a of the screen 14.

The step of calculate jointly a displacement value (step 33) set forth above can also be done based on relative coordinate values to get the displacement of the cursor 141. For instance, the finger moves on the first cursor control pad 12 from point d1 to d2, the coordinate of point d1 is (X1', Y1'), and the coordinate of point d2 is (X1, Y1); and the finger moves on the second cursor control pad 13 from point c1 to c2, the coordinate of point c1 is (X2', Y2'), the coordinate of point c2 is (X2, Y2); then the displacement value of the cursor calculated based on the relative coordinate values is:

$$A \cdot (X1 - X1°, Y1 - Y1°) + B \cdot (X2 - X2°, Y2 - Y2°)$$

where A and B are constants, and A is greater than B. The values of A and B are adjustable. For moving the cursor 141 through the first cursor control pad 12 (referring to FIG. 4), the finger moves an interval f1 from point d1 to point d2 on the first cursor control pad 12 corresponding to moving the cursor 141 on the screen 14 at a corresponding large interval F1 from point e0 to point e1, where A. f1=F1 ; for moving the cursor 141 through the second cursor control pad 13, the finger moves an interval f2 from point c1 to point c2 on the second cursor control pad 13 corresponding moving the cursor 141 on the screen 14 at a small interval F2 from point e1 to point e2, where B . f2 = F2.

The step of calculate jointly a displacement value (step 33) set forth above can also be done based on mixed calculation using the relative coordinate values and absolute coordinate values to get the displacement of the cursor 141. Namely the displacement of the second cursor control pad 13 adopts the relative coordinate values. For instance the finger moves from point d1 to point d2 on the first cursor control pad 12, where the coordinate (X1, Y1) of point d2 is an absolute coordinate value; and the finger moves from point c1 to point c2 on the second cursor control pad 13, the coordinate of point c1 is (X2', Y2') and the coordinate of point c2 is (X2, Y2) are relative coordinate values; then the calculated displacement value of the cursor is:

$$A \cdot (X1, Y1) + (X2 - X2°, Y2 - Y2°)$$

where A and B are constants, and A is greater than B. The values of A and B are adjustable. For moving the cursor through the first cursor control pad 12 (referring to FIG. 7), the finger moves to a segment 12a on the first cursor control pad 12 where point d2 is located directly corresponding to moving the cursor 141 to point e1 on a large segment 14a of the screen 14; and the second cursor control pad 13 controls moving of the cursor 141 by moving the finger from point c1 to point c2 at an interval f2 corresponding to moving the cursor 141 on the screen 14 from point e1 to point e2 at a small interval F2, wherein B . f2 = F2.

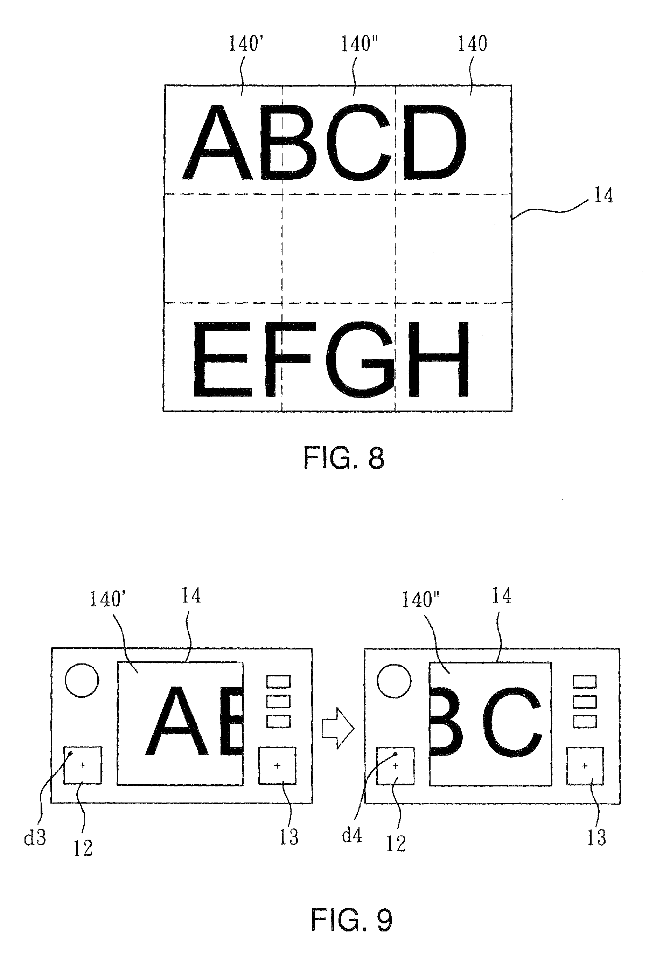

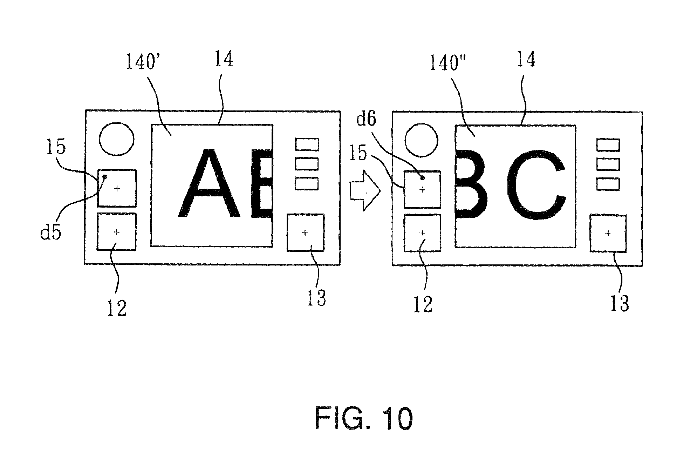

Refer to FIGS. 8 and 9 for an embodiment that adopts joint calculation of a displacement value through the absolute coordinate value (step 33). When a picture 140 of a document cannot be fully displayed on the screen 14 (namely the size of the displaying data is larger than the screen, and only a portion of data can be displayed), such a condition frequently happens to browsing Web pages, or viewing the Web pages on a small screen such as PDAs or the like where the picture 140 of the entire document cannot be fully displayed, either the first or second cursor control pad 12 or 13 can be set to the same area as the picture 140. And the calculation based on the absolute coordinate value can be adopted. Thereby on either the first or second cursor control pad 12 or 13 (the first cursor control pad is selected as an example), the first displacement signal of moving the finger from point d3 (d4) on the first cursor control pad 12 displays a partial picture on the screen 14 corresponding to a partial segment 140' (140") to facilitate fast Web page browsing; or a third cursor control pad 15 (referring to FIGS. 8 and 10) can be added to accomplish the partial picture moving operation mentioned above. Namely a third displacement signal of the finger moving to point d5 (d6) on the third cursor control pad 15 will display a corresponding picture of the partial segment 140' (140").

**LEGEND FOR DRAWINGS :**

**FIG. 3:**

31 - Get a cursor position on a screen
32 - Get a displacement signal
33 - Calculate jointly a displacement value

34 - Move the cursor on the screen

**FIG. 5:**

2 - Host, 14 - Screen

**Claims**

**1.** A composite cursor input method, comprising at least the following steps:

1-1. getting a cursor position on a screen;
1-2. getting a displacement signal;
1-3. calculating jointly a displacement value; and
1-4. moving the cursor on the screen.

**2.** The method of claim 1, wherein the calculating jointly a displacement value is based on displacement signals of a first cursor control pad and a second cursor control pad, the displacement signals including a first displacement signal of a finger movement detected by the first cursor control pad and a second displacement signal of another finger movement detected by the second cursor control pad.

**3.** The method of claim 1, wherein the displacement signals further includes a third displacement signal of yet another finger movement detected by a third cursor control pad.

**4.** The method of claim 2, wherein the calculating jointly a displacement value is based on the first displacement signal and the second displacement value through a joint calculation according to absolute coordinate values to get the displacement value of the cursor.

**5.** The method of claim 2, wherein the calculating jointly a displacement value is based on the first displacement signal and the second displacement signal through a joint calculation according to relative coordinate values to get the displacement value of the cursor.

**6.** The method of claim 2, wherein the calculating jointly a displacement value is based on the first displacement signal adopting an absolute coordinate value and the second displacement signal adopting a relative coordinate value to perform a mixed calculation to get the displacement value of the cursor.

**7.** The method of claim 2, wherein when the screen is smaller than displaying data and can only display a portion of the data, at least one of the first and the second displacement signals moves the portion where the data is displayed.

FIG. 1

FIG. 2

3

| GET A CURSOR POSITION ON A SCREEN | 31 |

| GET A DISPLACEMENT SIGNAL | 32 |

| CALCULATE JOINTLY A DISPLACEMENT VALUE | 33 |

| MOVE THE CURSOR ON THE SCREEN | 34 |

**FIG. 3**

**FIG. 4**

FIG. 5

FIG. 6

FIG. 7

FIG. 8

FIG. 9

FIG. 10

European Patent
Office

**EUROPEAN SEARCH REPORT**

Application Number

EP 06 11 0984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN<br>vol. 2003, no. 07,<br>3 July 2003 (2003-07-03)<br>& JP 2003 067128 A (SHARP CORP),<br>7 March 2003 (2003-03-07)<br>* abstract * | 1-7 | INV.<br>G06F3/041<br><br>ADD.<br>G06F3/038<br>G06F3/033 |
| A | US 2004/263484 A1 (MANTYSALO TAPIO ET AL)<br>30 December 2004 (2004-12-30)<br>* abstract *<br>* paragraph [0002] *<br>* paragraph [0065] - paragraph [0066];<br>figure 7a * | 1,2,7 | |
| A | PATENT ABSTRACTS OF JAPAN<br>vol. 018, no. 100 (P-1695),<br>17 February 1994 (1994-02-17)<br>& JP 05 298025 A (CANON INC),<br>12 November 1993 (1993-11-12)<br>* abstract * | 1,2,6 | |
| A | PATENT ABSTRACTS OF JAPAN<br>vol. 2003, no. 12,<br>5 December 2003 (2003-12-05)<br>& JP 2004 086735 A (TOSHIBA CORP),<br>18 March 2004 (2004-03-18)<br>* abstract * | 1,2,7 | TECHNICAL FIELDS SEARCHED (IPC)<br><br>G06F |
| A | US 2003/025678 A1 (LEE JU-BEAM ET AL)<br>6 February 2003 (2003-02-06)<br>* abstract *<br>* paragraph [0018] - paragraph [0021];<br>figures 1,2 *<br>* paragraph [0025] - paragraph [0036];<br>figures 3-5 * | 1,2,4 | |

-/--

The present search report has been drawn up for all claims

| Place of search | Date of completion of the search | Examiner |
|---|---|---|
| The Hague | 19 June 2006 | Bravo, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

**EUROPEAN SEARCH REPORT**

Application Number

EP 06 11 0984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 992 878 A (HEWLETT-PACKARD COMPANY) 12 April 2000 (2000-04-12) * abstract * * paragraph [0019] - paragraph [0025]; figure 2 * ----- | 1,2,6 | |
| A | PATENT ABSTRACTS OF JAPAN vol. 1998, no. 12, 31 October 1998 (1998-10-31) & JP 10 187338 A (MITSUMI ELECTRIC CO LTD), 14 July 1998 (1998-07-14) * abstract * ----- | 1,2,6 | |
| A | PATENT ABSTRACTS OF JAPAN vol. 1998, no. 02, 30 January 1998 (1998-01-30) & JP 09 258901 A (SMK CORP), 3 October 1997 (1997-10-03) * abstract * ----- | 1,2,6 | |
| A | EP 1 302 841 A (WACOM CO., LTD) 16 April 2003 (2003-04-16) * abstract * * paragraph [0016] - paragraph [0024] * ----- | 1,2,7 | TECHNICAL FIELDS SEARCHED (IPC) |
| A | PATENT ABSTRACTS OF JAPAN vol. 2003, no. 12, 5 December 2003 (2003-12-05) -& JP 2004 234504 A (TOSHIBA CORP), 19 August 2004 (2004-08-19) * abstract; figures 4,6,7 * ----- | 1,2,6,7 | |
| A | EP 1 016 952 A (ALPS ELECTRIC CO., LTD) 5 July 2000 (2000-07-05) * abstract * * paragraph [0022] - paragraph [0033] * ----- | 1,2,6,7 | |

The present search report has been drawn up for all claims

| Place of search | Date of completion of the search | Examiner |
|---|---|---|
| The Hague | 19 June 2006 | Bravo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 0984

This annex lists the patent family members relating to the patent documents cited in  the above-mentioned European search report.
The members are as contained in the European Patent Office EDP file on
The European Patent Office is in no way liable for these particulars which are merely  given for the purpose of information.

19-06-2006

| Patent document cited in search report | | | Publication date | Patent family member(s) | | Publication date |
|---|---|---|---|---|---|---|
| JP 2003067128 | A | | 07-03-2003 | NONE | | |
| US 2004263484 | A1 | | 30-12-2004 | EP<br>WO | 1642445 A1<br>2004114636 A1 | 05-04-2006<br>29-12-2004 |
| JP 05298025 | A | | 12-11-1993 | NONE | | |
| JP 2004086735 | A | | 18-03-2004 | US | 2004100451 A1 | 27-05-2004 |
| US 2003025678 | A1 | | 06-02-2003 | CN<br>KR | 1402116 A<br>2003012815 A | 12-03-2003<br>12-02-2003 |
| EP 0992878 | A | | 12-04-2000 | US<br>US | 6559833 B2<br>2003048259 A1 | 06-05-2003<br>13-03-2003 |
| JP 10187338 | A | | 14-07-1998 | NONE | | |
| JP 09258901 | A | | 03-10-1997 | NONE | | |
| EP 1302841 | A | | 16-04-2003 | JP<br>US | 2003122492 A<br>2003080940 A1 | 25-04-2003<br>01-05-2003 |
| JP 2004234504 | A | | 19-08-2004 | EP<br>US | 1450239 A2<br>2004239621 A1 | 25-08-2004<br>02-12-2004 |
| EP 1016952 | A | | 05-07-2000 | DE<br>DE<br>TW<br>US | 69920646 D1<br>69920646 T2<br>448396 B<br>6681268 B1 | 04-11-2004<br>09-02-2006<br>01-08-2001<br>20-01-2004 |

EPO FORM P0459

For more details about this annex : see Official Journal of the European Patent Office, No. 12/82